Europäisches Patentamt

European Patent Office

Office européen des brevets

(11) Publication number: **0 117 751**
**B1**

# EUROPEAN PATENT SPECIFICATION

(45) Date of publication of patent specification: **07.01.88**

(21) Application number: **84301263.4**

(22) Date of filing: **27.02.84**

(51) Int. Cl.⁴: **B 23 K 26/08, B 21 C 37/08**

(54) **An apparatus for butt welding steel strips by using laser beam in a steel strip-processing line.**

(30) Priority: **28.02.83 JP 28664/83**

(43) Date of publication of application:
**05.09.84 Bulletin 84/36**

(45) Publication of the grant of the patent:
**07.01.88 Bulletin 88/01**

(84) Designated Contracting States:
**DE FR GB IT SE**

(56) References cited:
**AT-B- 333 100**
**DE-A-2 009 532**
**DE-A-3 203 287**
**DE-B-2 350 933**
**DE-B-2 949 095**
**FR-A-2 420 394**
**US-A-4 237 364**

**PATENTS ABSTRACTS OF JAPAN, vol. 7, no.
12, 19 January 1983 & JP-A-57-168796**

**PATENTS ABSTRACTS OF JAPAN, vol. 6, no.
48, 27 March 1982 & JP-A-56-163087**

(73) Proprietor: **KAWASAKI STEEL CORPORATION**
**1-28, Kitahonmachi-Dori 1-Chome**
**Chuo-ku Kobe-Shi Hyogo 650 (JP)**

(72) Inventor: **Aihara, Masaki Chiba Works**
**Kawasaki Steel Corporation 1, Kawasaki-Cho**
**Chiba City (JP)**
Inventor: **Tsuruta, Noboru Chiba Works**
**Kawasaki Steel Corporation 1, Kawasaki-Cho**
**Chiba City (JP)**
Inventor: **Kawai, Yoshito Chiba Works**
**Kawasaki Steel Corporation 1, Kawasaki-Cho**
**Chiba City (JP)**
Inventor: **Sasaki, Hiroaki Research Laboratories**
**Kawasaki Steel Corporation 1, Kawasaki-Cho**
**Chiba City (JP)**

(74) Representative: **Overbury, Richard Douglas et al**
**HASELTINE LAKE & CO Hazlitt House 28**
**Southampton Buildings Chancery Lane**
**London WC2A 1AT (GB)**

(56) References cited:
**PATENTS ABSTRACTS OF JAPAN, vol. 5, no.
97, 24 June 1981 & JP-A-56-41091**

**0 117 751**

(56) References cited:

**PATENTS ABSTRACTS OF JAPAN, vol. 6, no. 61, 20 April 1982 & JP-A-57-4393**

**PATENTS ABSTRACTS OF JAPAN, vol. 6, no. 267, 25 December 1982 & JP-A-57-159285**

## Description

The present invention relates to an apparatus for butt welding steel strips by means of a laser beam (hereinafter referred to as "laser butt welding apparatus") in a steel strip-processing line.

In a steel strip steel processing line, steel strips are joined together at an entry section of the line, and fed to a later processing stage so that they are continuously treated and produced. The steel strips have been conventionally joined by a seam welding machine, a flash butt welding machine, or an arc welding machine such as a TIG arc welding machine. These welding methods have their own peculiar characteristics respectively. Seam welding is characterized in that the welding is possible at a high speed in a short time, but the thickness of the welded portion becomes 180—130% of that of the base metal because the steel strips are welded by piling their edges one upon another. Therefore, the welded portion cannot be rolled in a coil when taking problems such as buckling into account. If a scale is present on the surface of the steel strip as in the case of a hot-rolled steel strip or the like, this method has the defect that the surface must be ground prior to the welding. Further, in the case of the welding of thin steel strips, since the strips are pressed by means of electrode wheels, this method has the drawback that the profile at junction and the vicinity thereof is deteriorated.

Flash butt welding can make the welding time shorter than seam welding because the steel strips are welded at one time over their whole width in the former method, but thin steel strips are likely to be bent due to the upsetting step, so that this method has the defect that it is applicable to the relatively thick steel strips of not less than 1.6 mm, but not to thin steel strips. It also has the defect that it is inapplicable to special steels such as silicon steel, stainless steel, and high carbon steel because of oxidation, the large heat input and the coarse grain growth at the welded portion and the heat affected zone when flashing is effected. As a result, the use of flash butt welding is generally restricted to the welding of low carbon steel strips of not less than 1.6 mm in thickness.

According to TIG arc welding, it is possible to improve the quality of the welded portion through the addition of a filler wire or the like, and therefore, this method can be used for stainless steel. However, since the heat input is large, it has the defect that it is inapplicable to material such as silicon steel in which coarse grains are likely to grow. Further, it also has the defects that the welding speed is slow, and the welding time is long.

As mentioned above, although the conventional seam welding, flash butt welding, TIG arc welding and the like have been used because of their respective characteristics, they cannot be applied to silicon steel or the like.

As such a welding machine for such steels, the inventors have proposed a laser but welding apparatus.

In the case of the laser butt welding of the steel strips, particularly made of high Si steel (Si$\geq$0.8%) and high carbon steel (C$\geq$0.3%), it has been found that the welding strength is enhanced by the provision of a filler wire at the butted edges of the steel strips to be welded together.

In such a welding method, it is common practice that the welding is done at a beam diameter of about 0.2—0.8 mm with respect to a gap of 0.05—2 mm between the butted edges of the steel strips. Before carrying out the butt-welding, the end portions of the steel strips are cut by means of a shear, but there is the possibility that a uniform lateral gap between the edges of the steel strips is not formed, or the track of the laser beam is not coincident with the center line of the gap due to poor precision of the shear.

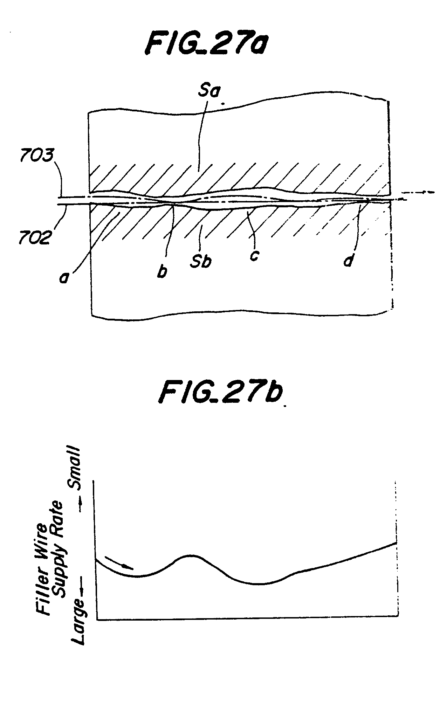

This phenomenon will be elucidated in more detail with reference to Fig. 27(a) of the accompanying drawings.

Fig. 27(a) illustrates the shape of the gap formed when the edges of the steel strips are butted with each other. Reference numerals Sa and Sb are preceding and trailing steel strips, and reference numerals 702 and 703 are the track of the laser beam and the center line of the gap between the butted edges of the steel strips respectively. At this state, the welding is carried out by running the laser beam along the straight line 702 in the transverse direction of the steel strips, while being kept at a constant position in the longitudinal direction i.e. without being adjusted to be longitudinally displaced, and by supplying a filler wire at a constant rate. But, the fused filler wire is lacking at the portions a and c, while on the contrary, the fused filler wire is in excess at the portions b and d. Particularly, the gaps at the positions a and c are not completely filled with the fused filler wire and the amount of the filler wire fused is not sufficient and the welding strength is poor. With respect to the positions b and d having the excessively fused filler wire, such a method is economically unfavorable.

Thus, there has been demanded a welding apparatus which can weld special steels such as silicon steel or the like.

An object of the present invention is to provide an automatic laser butt welding apparatus for butt welding steel strips in a steel-processing line by using a laser beam as a heat source.

More specifically, the object of the invention is to provide a laser butt welding apparatus usable for welding almost all kinds of steels, for instance, special steels such as silicon steel, stainless steel or the like, plated steels such as a galvanized steel or the like, and high tensile strength steels.

It is an another object of the invention to provide a laser butt welding apparatus usable for conventional steel strips of from small to large thickness without limiting the thickness as in the case of flash butt welding.

It is a further object of the invention to provide a laser butt welding apparatus which enables a far higher speed welding than TIG arc welding at high efficiency.

It is a still further object of the invention to provide a laser butt welding apparatus which can stably provide a satisfactory welding strength even when the gap between the butted edges of the steel strips to be welded together is not uniform.

AT-B-333100 discloses an apparatus for joining together the tail edge of a preceding steel strip to the front edge of the trailing steel strip which apparatus includes a clamp means for the end portions of the strips, a cutting means for cutting the end portions of the strips to form the front and tail edges, a means for butting the front and tail edges, and a means of welding the front and tail edges together. However, the cutting means is a rotary shear arranged to cut the strips one after the other. Further there is no gap between the front and tail edges of the strips to accommodate filler wire and there is no suggestion to effect the welding by means of a laser.

DE—B1—2949095 discloses a technique for joining together steel strips by laser welding. However, in this technique the end portions of the strips are spaced apart vertically prior to being cut by means of a laser. The upper strip is then moved so that its cut edge is in butting relationship with the cutting edge of the other strip and the butting edges are then welded by laser.

According to the present invention, there is provided a butt welding apparatus for joining together the tail edge of a preceding steel strip to the front edge of a trailing steel strip which apparatus comprises

(i) a clamp means for the end portions of the steel strips and including an inlet clamp and an outlet clamp, at least one of which is movable forward and rearward along the strip-feed line and each having an upper clamp member and a lower clamp member wherein the upper clamp members extend nearer to each other than the lower clamp members,

(ii) a cutting means positioned between the inlet and outlet clamps for cutting the end portions of the strips to form the front and tail edges and including a preceding steel strip shear and a trailing steel strip shear each having a lower shearing blade and an upper shearing blade,

(iii) a means for butting the front and tail edges of the steel strips while being clamped by means of said clamp means, and

(iv) a means of welding the front and tail edges together including a center clamp adapted to clamp the butted front and tail edges of the steel strips in cooperation with the upper clamp members during welding characterised in that

(a) said upper shearing blades and said lower shearing blades are advanceable and retractable in a direction perpendicular to the strip-feed line so as to simultaneously cut the end portions of the preceding and trailing steel strips to form said front and tail edges whilst the end portions of the preceding and trailing steel strips are held between the lower shearing blades and the upper clamp members,

(b) the welding means includes a laser means comprising a laser oscillator placed off the strip-feed line, an optical system to direct and focus a laser beam irradiated from said laser oscillator on to the weld zone constituted by the butted front and tail edges, a torch member for applying the laser beam and which is movable transversely of the steel strips, and a means for continuously feeding a filler wire to the weld zone, and

(c) the butting means includes means for positioning the strips so that the butted front and tail edges are spaced apart by a distance smaller than the diameter of the filler wire.

In accordance with one embodiment of the invention, the apparatus includes means whereby the size of the gap between the front and tail edges of the strips to be welded together and the center line of the gap are detected, and the supply rate of the filler wire to the gap is controlled based on the size of the gap and the center of the laser beam is adjusted to be in coincidence with the center line of the gap.

In accordance with another embodiment of the invention, the apparatus includes means whereby the size of the gap between the front and tail edges of the strips to be welded together and the center line of the gap are detected, and the amount of filler wire supplied to the gap is controlled based on the size of the gap by varying the welding speed and the center of the laser beam is adjusted to be in coincidence with the center line of the gap.

For a better understanding of the invention and to show how the same may be carried out, reference will be made, by way of example, to the accompanying drawings wherein:

Fig. 1 is a schematic plan view of the whole laser butt welding apparatus according to the present invention;

Fig. 2 is a side view of a clamp means and a cutting means in the laser butt welding apparatus of Fig. 1;

Fig. 3 is a front view of the laser butt welding apparatus of Fig. 1;

Fig. 4 is a detailed view illustrating the state in which a preceding steel strip and a trailing steel strip are clamped in the apparatus of Fig. 1;

Fig. 5 is a plan view of a station for checking the performances of an optical system for irradiating a laser beam onto a weld zone in the apparatus of Fig. 1;

Fig. 6(a) is a side view of the station for checking the performance of the optical system of Fig. 5;

Fig. 6(b) is a side view of another embodiment of the station of Fig. 6(a) for checking the performances of the optical system;

Fig. 7 is a side view showing the butting means of an inlet clamp of the apparatus of Fig. 1;

4

Fig. 8 is a plan view of the butting means of the inlet clamp as viewed from the direction of the arrow of X—X in Fig. 7;

Fig. 9 is a sectional view as viewed from the direction of the arrow A—A in Fig. 8;

Fig. 10 is a sectional view as viewed from the direction of the arrow B—B in Fig. 9;

Fig. 11 is a plan view of the laser torch of the apparatus of Fig. 1;

Fig. 12 is a side view of the laser torch of Fig. 11;

Fig. 13 is a side view of a center clamp of the apparatus of Fig. 1;

Fig. 14 is a detailed view of the center clamp of Fig. 13;

Fig. 15 is a sectional view illustrating the state in which the preceding steel strip and the trailing steel strip are improperly butted with each other;

Figs. 16(a)—16(f) are views schematically illustrating the operation of the laser butt welding apparatus of Fig. 1;

Fig. 17 is a graph illustrating the relationship between the distance I from the tip of an upper clamp member to the side edge of the adjacent upper shearing blade of the apparatus of Fig. 1 and a value $\Delta G$ which is obtained by subtracting the minimum value of the distance between the tail edge of the preceding strip and the front edge of the trailing steel strip along the line direction from the maximum value;

Fig. 18 is a schematic view illustrating the value $\Delta G$ in Fig. 17;

Fig. 19 is a graph illustrating the relationship between tan $\alpha$ in which $\alpha$ is the rake angle of the shearing blade of the apparatus of Fig. 1, the value $\Delta G$ and the thickness of the steel strip;

Fig. 20 is a schematic view illustrating a sectional profile of the welded portion formed when the center of the laser beam deviates from the centre of the gap;

Figs. 21(a) and 21(b) are side and end views of another embodiment of the laser beam path construction in the laser torch of the apparatus of Fig. 1;

Figs. 22(a) and (b) are side and end views of still another embodiment of the laser beam path construction in the laser torch of the apparatus of Fig. 1;

Fig. 23 shows the relationship between the laser beam, the filler wire guide pipe, and the steel strip in the apparatus of Fig. 1;

Fig. 24 is a side view of the filler wire feed means attached to the laser torch of the apparatus of Fig. 1;

Fig. 25 is a side view corresponding to Fig. 24 but showing another embodiment of the apparatus of Fig. 1;

Figs. 26(a) and 26(b) are views illustrating the operation of the upper clamp member and the torch of the apparatus of Fig. 1;

Fig. 27(a) is a graph illustrating the shape of the gap formed between butted front and tail edges of the strips to be welded together;

Fig. 27(b) is a graph illustrating the supply rate of filler wire along the gap formed between the butted front and tail edges as shown in Fig. 27(a) when the laser butt welding is carried out according to the present invention;

Fig. 28 is a schematic sectional view of a laser butt welding apparatus according to the invention having means for detecting the size and the location of the center line of the gap between the butted front and tail edges of the steel strips to be welded;

Fig. 29 is a graph showing the result of a repeated flexing strength test conducted at a welded portion of welded steel strips; and

Fig. 30 is a graph illustrating the breakage rates when re-rolling welded steel strips obtained in accordance with the present invention and in accordance with the prior art.

The present invention will be explained in more detail by reference to the attached drawings.

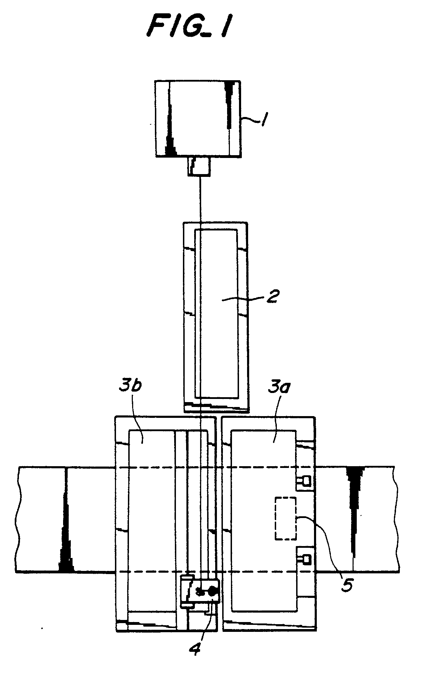

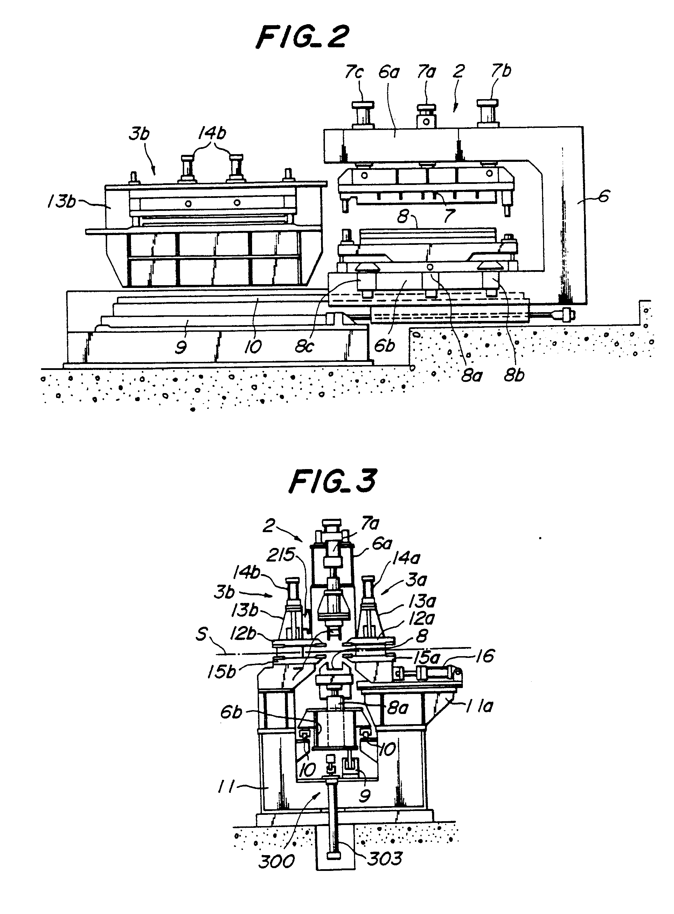

In Fig. 1, reference numerals 1, 2 and 3 are a laser oscillator, a cutting means in the form of a double blade shearing means, and a clamp means consisting of an inlet clamp 3a and an outlet clamp 3b, respectively. Reference numerals 4 and 5 are a laser means and a butting means, respectively. The double blade shearing means 2, the clamp means 3 and the butting means 5 will be explained by referring to Figs. 2 and 3. Although the clamp means may be included in the butting means in view of its function, they are described as separate members in the following:

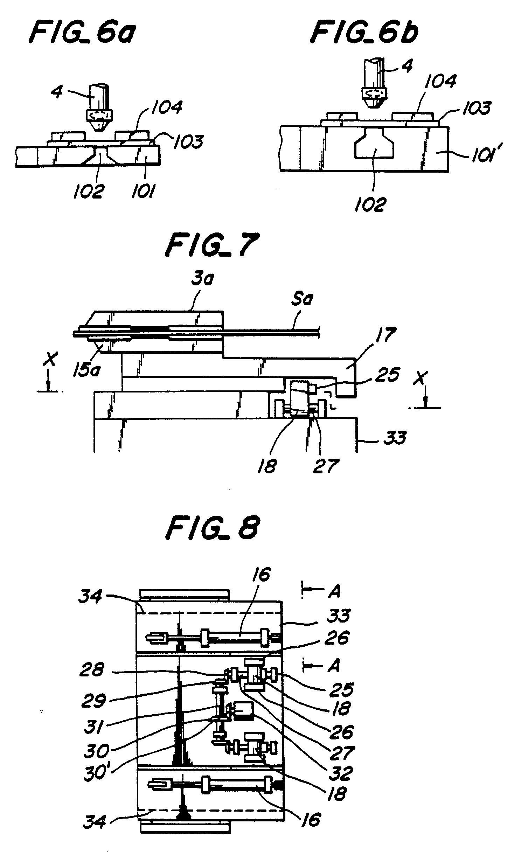

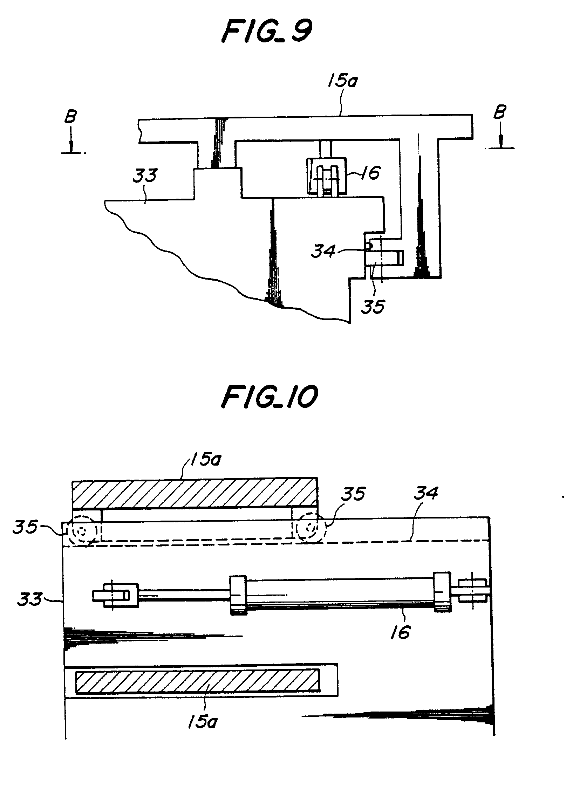

In Figs. 2 and 3, the double blade shearing means 2 has upper and lower shearing blades 7 and 8 mounted respectively on the upper and lower arms 6a and 6b of a frame 6 having the shape of a letter C. The upper blades 7 and the lower blades 8 are independently movable upwards and downwards. More particularly the blades 7 are vertically movable by means of a cylinder 7a and guide rods 7b and 7c secured to the upper arm 6a and the lower blades 8 are vertically movable by means of a cylinder 8a and guide rods 8b and 8c secured on the lower arm 6b. Each upper blade 7 is provided with a rake angle in a transverse direction of the strip, which is selectively determined in such a range as to improve the shear-cut profile of the strips. The double blade shearing means 2 is so constituted that the frame 6 can be advanced to and retracted from a position between the outlet clamp 3b and the inlet clamp 3a, in a transverse direction of the steel strip while being guided by rails 10, by means of a drive means 9 (for instance, a cylinder). The inlet clamp 3a and the outlet clamp 3b are disposed on a stationary base 11 in opposite relationship to one another. The upper clamp members 12a and 12b of clamps 3a and 3b are both vertically movable with respect to the lower clamp members 15a and 15b, respectively of clamps 3a and 3b by means of cylinders 14a and 14b secured to upper frames 13a and 13b, so as to clamp or release the end portions of steel strips fed along the feed line. The inlet clamp 3a is movable in the strip-feed line direction on a lower base 33 (see Figures 7—10) of the stationary base 11 by means of a drive means, for instance, a cylinder 16, so that said inlet clamp moves forwardly or rearwardly with respect to the outlet clamp 3b. The outlet clamp 3b is fixed so as not to be displaceable in the strip-feed line direction.

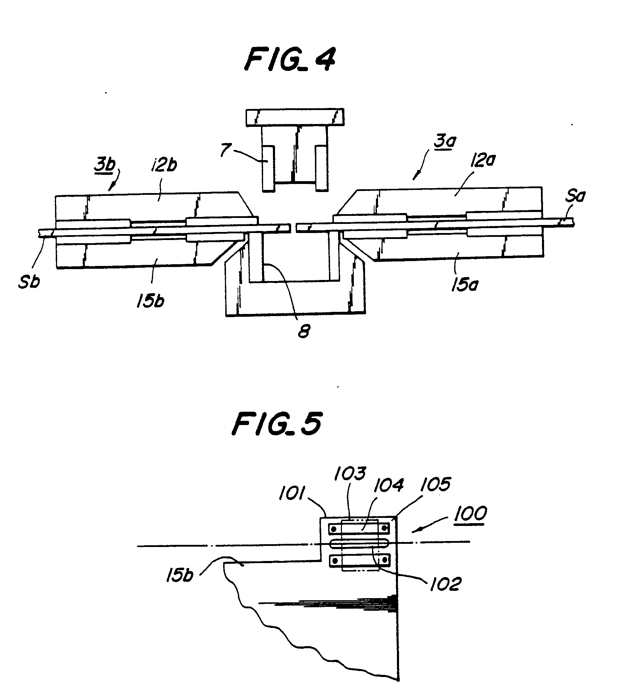

Next, the clamp means is explained in more detail referring to Fig. 4. Top ends of the upper clamp members 12a and 12b of the inlet and outlet clamps 3a and 3b are extended a little nearer toward the shear-running line than those of the lower clamp members 15a and 15b, so that the steel strips Sa and Sb to be cut are clamped between the tips of the upper clamp members 12a, 12b and the lower blades 8.

As shown in Figs. 5 and 6(a), (b), a station 100 for checking the performances of an optical system for irradiating a laser beam on the weld zone of the steel strips is provided at the lower clamp member 15b at a location which is on an extension of the running path of the laser torch of the laser means 4.

Reference numeral 101 is a table having a slit just under the torch. Numeral 103 is a sample plate which is secured to the table 101 by means of press plates 104 and bolts 105.

According to this embodiment, the table 101 is joined to the lower clamp member 15b, but it may be supported by base 33.

Referring next to Figs. 7—10, the butting means will be explained.

The inlet clamp 3a includes a supporting member in the form of arm 17. When the inlet clamp 3a is moved towards the outlet clamp 3b by means of the cylinder 16, contact of the arm 17 with stopper 18 occurs and the forward displacement of the inlet clamp 3a is restricted. Thus, when the steel strips are cut, the stopper 18 is spaced from the flange of the arm 17 by a slightly larger distance than the width of the gap between the edge faces of the strips cut by the shear.

A pressure detector 25 such as a load cell is provided at the contact face between the stopper 18 and the arm 17 and the stopper 18 is movable within a guide member 26. The stopper 18 serves to set the gap between the butted front and tail edges of the shear-cut trailing and preceding steel strips so that it is smaller than the diameter of the filler wire to be used in the welding. That is, a screw shaft 27 is screwed into the lower portion of the stopper 18, and the screw shaft is adapted to be rotated for shifting the position of the stopper 18 by actuating motor 32 via bevel gears 28 and 29, a shaft 31 and bevel gears 30 and 30'. The bevel gears 28, 29, 30 and 30' and the shafts 27 and 31 comprise a stopper positioning system and are arranged on the lower base 33. With this construction, it is possible to stop the trailing steel strip at a place spaced from the sheet-cut edge of the preceding steel strip, and to gently adjust the position of the trailing steel strip so that the adjacent front and tail edges of the steel strips are separated by a specified distance by actuating the motor 32 from an output from the stopper or the like. In this embodiment, the inlet clamp 3a provided with the arm 17 is movable by means of the cylinder 16.

In the above embodiment, two stoppers 18 are driven by means of a single motor 32, but as a matter of course, they may be driven independently by means of two motors.

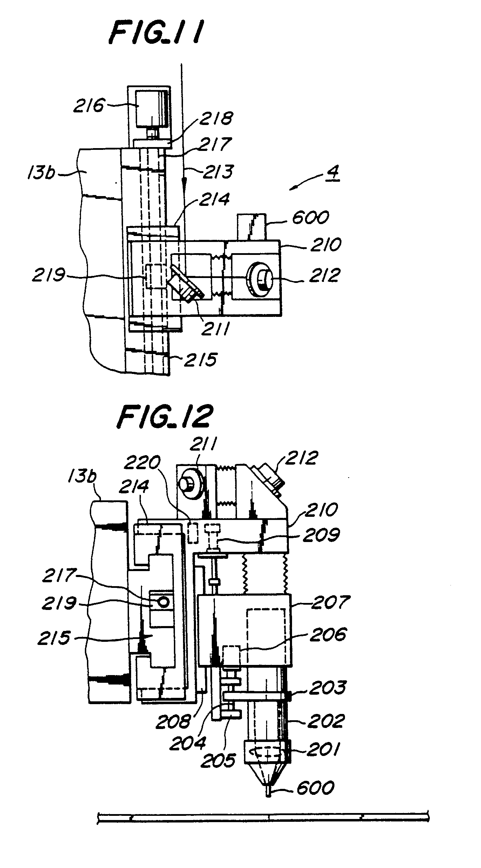

With reference to Figs. 11 and 12, the laser means 4 will be explained.

Reference numeral 201 is a condenser which is attached to torch 202. Reference numeral 203 is a bracket attached to the torch 202 and engaged with a screw axis 204 at its other end. The screw shaft 204 is supported by bearing 205 at both ends thereof and connected to a motor 206. Reference numeral 207 is a torch holder which is adapted to ascend and descend while being guided by a guide means 208. This torch holder 207 also serves to guide the ascending and descending of the torch 202. A cylinder 209 is attached to a reflector base 210 and is adapted to raise and lower the torch holder 207. Reference numerals 211 and 212 are bender reflectors attached to the reflector base 210, and adapted to bend the laser beam to a desired direction. The reflector base 210 is guided by a carriage 214 and can be moved in a direction along the strip feed line perpendicular to the torch running path by a motor 220.

The carriage 214 is adapted to be moved in a direction perpendicular to the processing line by means of a guide means 215, a motor 216, a screw shaft 217 connected to the motor 216, bearing 218 of the screw shaft 217, and a nut 219 screwed to the screw shaft 217.

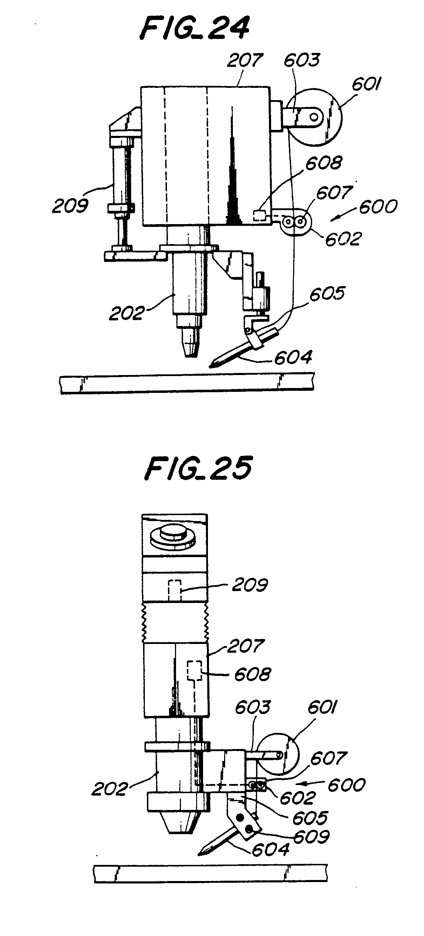

Reference numeral 600 is a filler wire feed means which will be explained in detail with reference to Figs. 24 and 25. In Fig. 24, the filler wire feed means is attached to the torch holder 207. As shown in Fig. 25, this filler wire feed means may be integrally attached to the torch 202 and adapted to move together with the torch.

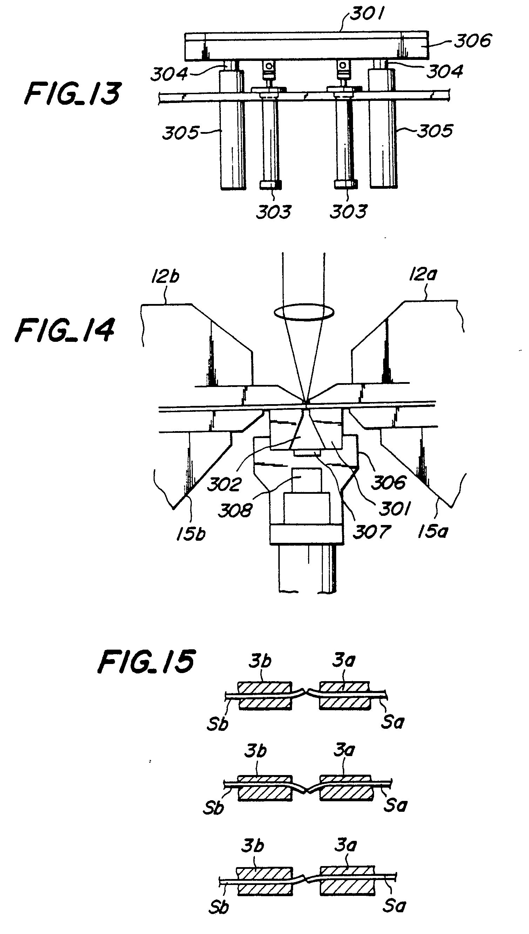

Centre clamp 300 will be explained with reference to Figs. 3, 13 and 14.

The center clamp 300 is arranged at a side opposite to the laser torch at the butting portion of the preceding and trailing steel strips and includes a backing bar 301 provided with a bag-like groove 302. The center clamp further comprises cylinders 303, guide rods 304 and guides 305, and is adapted to be contacted with or separated from the back face of the strips to be jointed. Reference numerals 306, 307 and 308 are a backing bar supporting base, a light absorbing member, and a coolant passage, respectively. The backing bar 301 is designed to have such a size that the ends of the preceding steel strip and the trailing steel strip are fully sandwiched between it and the upper clamp members 12a and 12b when elevated.

The bag-like groove 302 prevents the laser beam passed through the weld zone from reflecting and dispersing to the outside and further safety is assured by preventing the laser beam from leaking to the outside by the provision of the light absorbing member 37 on the face of the supporting base 306 onto which the laser beam is irradiated.

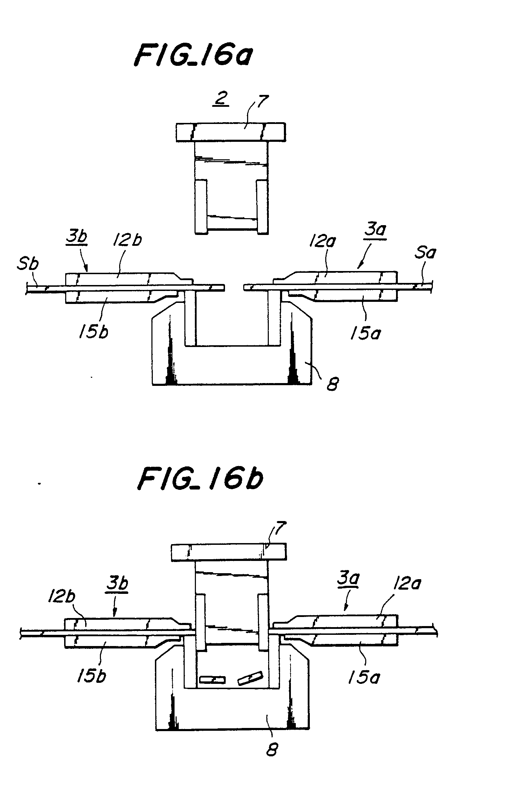

Further, since the end portions of the preceding and trailing steel strips are clamped between the upper clamp beams 12a and 12b and the backing bar 301 during the butting, deformation of the edge portions as shown in Fig. 15 can be avoided.

The filler wire is applied to the weld zone as follows:

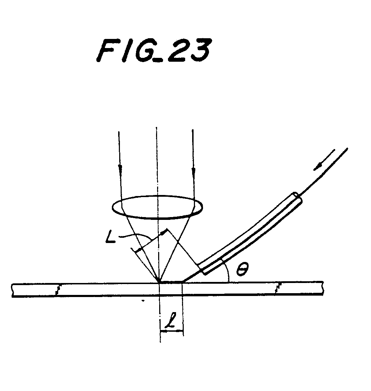

The preceding and trailing end portions are cut by the double blade shearing means 2 and the inlet clamp 3a is displaced toward the outlet clamp 3b the forward displacement being restrained by the stopper 18. Further positioning is done to set the gap between the edges of thu butted preceding and trailing steel strips smaller than the diameter of the filler wire used. Then, the torch 202 is displaced to focus the beam center at the gap center, and the filler wire feed means is positioned so that the center of the filler wire supplied therefrom is within the gap and is slightly advanced from the laser beam center. Thereafter, the filler wire is supplied onto the weld zone from a fore direction with respect to the welding direction and the welding is effected, while the filler wire is fused with the laser beam. By repeated investigations, the inventors have found that the welding strength is greatly influenced by the angle $\theta$ at which the initial feed line of the filler intersects with the surface of the steel strip, the distance $l$ between the point at which the filler wire is brought into contact with the steel strip surface and the intersection of the beam center and the steel strip surface, and the distance L between the tip of the filler wire guide tube and the intersection between the beam center and the steel strip surface (see Fig. 23).

The length $l$ is the contact length required for properly placing the filler wire in the gap set to be smaller than the diameter of the filler wire. In other words, the edges of the shear-cut preceding and trailing steel strips properly serve to locate the filler wire in the length $l$.

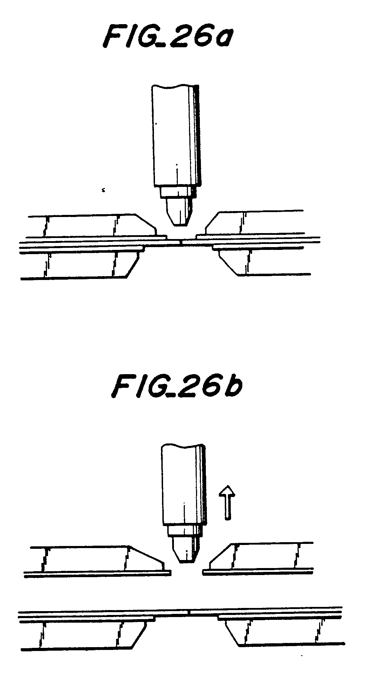

The filler wire feeding means shown at 600 in Fig. 24 for feeding the wire onto the weld zone comprises a filler wire reel 601 for storing the filler wire, which sandwich the filler wire feed rolls 607 and feed the same when rotated by means of a motor 608, and a guide tube 604 for guiding the filler wire toward the weld zone. The reel 601 and the feed rolls 607 are attached to the torch holder 207 by support means 603 and 602 respectively, while the guide tube 604 is attached to the torch by support means 605 and 606. The guide tube is designed to have an inner diameter which is substantially the same as the outer diameter of the filler wire, and it serves to guide the filler wire fed from the feed rolls 607 toward the weld zone, while straightening it. In general, it is necessary to open the clamp means clamping the preceding and trailing steel strips immediately after the completion of the welding so as to make the weld cycle time as short as possible and re-start the processing line. Thus, when the welding has been completed the torch must be retracted to a position above the clamps means by a specific distance before the clamp is opened so that interference between the torch and the clamp is avoided [Figs. 26(a) and 26(b)]. For this purpose, the ascending and descending cylinder 209 is actuated to lift the torch 202. However, since the wire reel and the feed rolls are secured to the stationary torch holder, the upper movement of the torch may cause the filler wire to be bent between the guide tube 604 and the filler rolls 607. Such bent wire may not recover its original straight form even when passed through the guide tube in which case the filler may not be fed to the weld zone in an appropriate state. If the distance between the feed rolls 607 and the guide tube 604 is too long, wire having a fine diameter and hence low rigidity is liable to be bent between the roller and the tube due to the resistance in the guide tube.

Fig. 25 shows another embodiment of a filler wire feed means according to the invention when it is anticipated that the filler wire may be bent at the time of the upper movement of the torch.

Reference numeral 601 is a wire reel for storing the filler wire, and reference numeral 607 is means (rolls) sandwiching the filler wire and adapted for feeding the filler wire from the reel on being rotated by a motor 608. Reference numeral 604 is a guide tube adapted for guiding the filler wire fed by the rolls 607 into the weld zone and adjustable by rolls 609. The inner diameter of the guide tube is designed to be substantially the same as the outer diameter of the filler wire so as to straighten the filler wire and feed it to the weld zone. The filler wire feed means 600 which comprises the filler wire reel 601, filler wire feed rolls 607 and the guide tube 604 is integrally attached to the torch 202 by support means 603, 602, 605. Reference numeral 605 is a support means for supporting the guide tube 604 and may be adjustable in terms of its inclination angle and its distance from the torch by an appropriate means (not shown).

When the torch is intended to be ascended or descended, the cylinder 209 (see Figs. 11 and 12) is actuated. At that time, since the filler wire feed means is integrally fitted to the torch, it ascends or descends together with the torch. With this construction, the positional interrelation between the wire reel, feed rolls and the guide tube is not varied irrespective of the torch movement. Thus, the filler wire is not bent or curved between the feed rolls 607 and the guide tube 604. Further, by reducing the distance between the feed rolls and the guide tube, it is possible to prevent wire having a small diameter from bending between the feed rolls 607 and the guide tube 604.

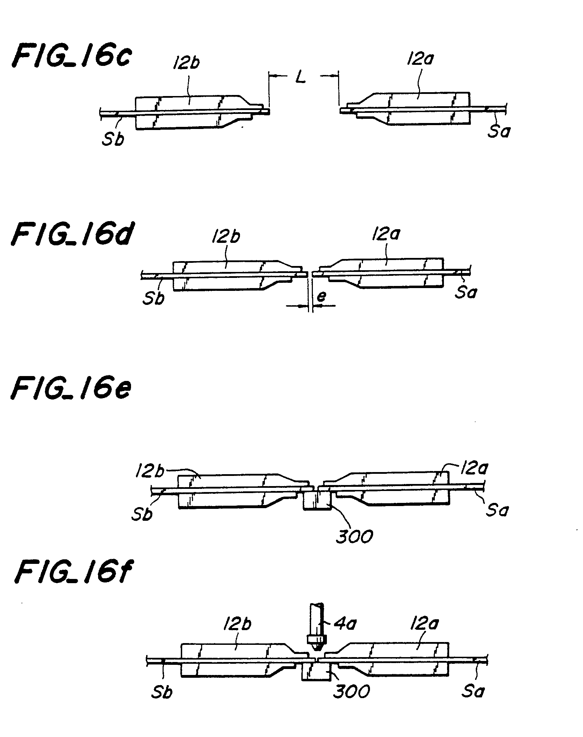

The operation of the apparatus according to the present invention will be explained with reference to Figs. 16(a)—16(f).

(1) When the end portions of the preceding steel strip and the trailing steel strip are fed and stopped at predetermined locations, the cylinders 14a and 14b of the inlet and outlet clamps 3a and 3b are actuated to clamp the preceding steel strip and the trailing steel strip between the clamp means. Next, the cylinder 8a is actuated to lift the lower blades 8 [Fig. 16(a)].

(2) The cylinder 7a is actuated to lower the upper blades 7 to cut the end portions of the preceding steel strip and the trailing steel strip [Fig. 16(b)].

(3) The cylinder 7a is reversely actuated to lift and retract the upper blades 7 and the cylinder 8a is actuated to lower the lower blades 8. Then, the cylinder 9 is actuated to move the shearing means 2 to a retracted position on the non-operation side [Fig. 16(c)].

(4) The cylinder 16 is actuated to advance the inlet clamp 3a, and when the front edge of the cut trailing steel strip approaches the tail edge of the cut preceding steel strip [Fig. 16(d)], cylinder 303 of center clamp 300 is actuated to clamp the steel strips between the upper clamp members 12a and 12b and the center clamp 300 [Fig. 16(e)]. Next, the torch 202 of the laser means (4a) is positioned near the butted edges of the preceding and trailing steel strips [Fig. 16(f)].

The front and tail edges of the steel strips are prevented from being deformed as shown in Fig. 15 by clamping them between the extended tip portions of the upper clamp member and the center clamp. Thus, an excellent welded joint is obtained.

(5) The motor 216 is actuated to drive the torch in the transverse direction of the steel strip. On the way, when a detector (not shown) detects the side of the strip, the filler wire begins to be fed, and then a shutter housed in the laser oscillator 1 is opened to irradiate the laser beam onto the side of the laser torch 202 a predetermined time interval after the filler wire feeding. The laser beam is bent in a direction parallel to the strip-feed line by means of the bender reflector 211, and is next bent in a direction vertical to the line by means of the bender reflector 212 and then passed through the condenser 201 to be focused onto the weld zone and to commence the welding while fusing the fed filler wire. The laser torch is run along a path extending in the transverse direction of the strips. When the other strip side is sensed by means of the detector, the feeding of the filler wire is stopped and then the irradiation of the laser beam is stopped at a predetermined time interval after the filler wire feeding has stopped. Then, the torch is carried to the retracted position and stopped.

When the gap between the butted edges of the steel strips is not uniform as shown in Fig. 27(a), the supply rate of the filler wire and/or the running speed of the torch is controlled. Fig. 27(b) shows the way in which the filler wire supply rate may be controlled in proportion to the size of the gap.

The filler wire supply rate is controlled as follows:

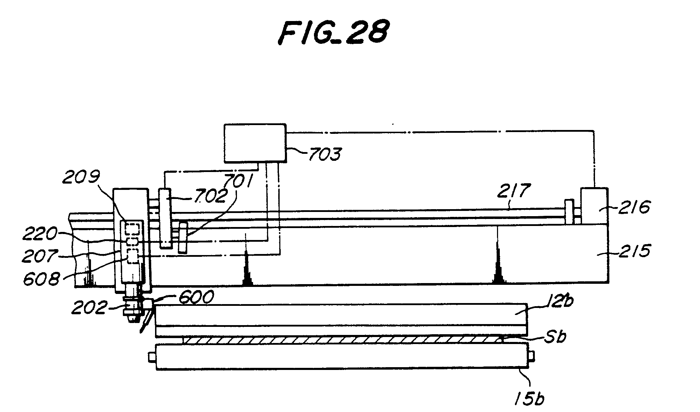

The location of the center and the size of the gap are detected, and the torch is displaced so that the center of the laser beam conforms with the center of the gap, while the supply rate of the filler wire is controlled to be in proportion to the size of the gap. If desired the filler wire supply rate may be kept constant in which case the running speed of the laser torch may be so controlled that the amount of filler wire supplied and fused is in proportion to the size of the gap. An apparatus according to the present invention for effecting the above operation will be explained with reference to Fig. 28, in which like parts are denoted by the same reference numerals used above.

Reference numeral 701 is a light irradiator which is located over the butted edges of the steel strips. It may be located under or at the side of the butted steel strips. The light irradiator is arranged to irradiate the butted edges with a light beam. Reference numeral 702 is a light receiving element such as a photo diode-array for detecting the size and the center of the gap between the butted edges through which the light is reflected or passed. The light irradiator 701 and the light receiving element 702 are attached to the torch holder and adapted to be moved together with the movement of the torch. The tip of the light receiving element 702 is positioned slightly in advance on the welding line. Reference numeral 703 is a control means including an arithmetic circuit and a memory means, which controls the center of the laser beam to coincide with the center line of the gap between the butted edges of the strips and the rate of the filler wire supplied so that it is in proportion to the size of the gap based on the detected signal from the light receiving element 702. That is, the size of the gap and the location of the center line of the gap are determined based on the signal from the light receiving element in the arithmetic circuit and stored in the memory means. When the laser butt welding is carried out, the information from the memory means is outputted to the motor 220 and the motor 608 to control the beam center and the amount of the filler wire. When the light receiving element is arranged so as to be able to detect the light reflected or passed through a portion to which the laser butt welding is just applied, the memory means may be omitted.

The rate of the filler wire supplied is controlled so as to be varied as shown in Fig. 27(b). In such a manner, the laser beam is run at the center line of the gap between the butted edges of the steel strip and the filler wire is supplied in a sufficient amount to fill the gap depending upon the size of the gap.

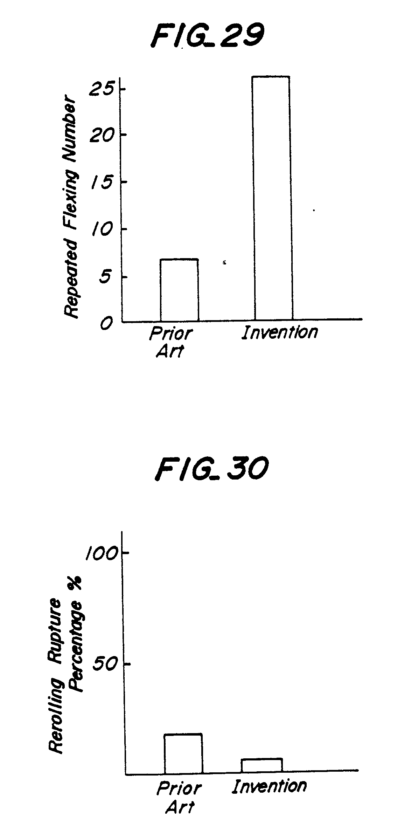

In the laser butt welding apparatus according to the invention, the welding strength is conspicuously improved as compared with the prior art. With respect to sample plates of Special Steel SK 5 having a welded portion, a repeated flexing strength test was carried out, and the breakage rate was determined when the plates were rolled. The results are shown in Figs. 29 and 30. From these figures it can be seen that the repeated flexing strength is far superior in accordance with the present invention than in the conventional case, and the breakage rate on re-rolling in accordance with the invention is more than twice as good as in the conventional case.

As mentioned above, according to the invention, an optimum welding strength can be stably obtained irrespective of the shape of the gap between the butted edges of the strips to be joined and without causing a deficiency or excess in the amount of fused filler wire.

Moreover, since the strength of the welded joint is satisfactorily high and uniform, a post treatment can be reliably carried out on the joined steel strips.

Next, the optical path of the laser beam in the apparatus according to the invention will be explained with reference to Figs. 11 and 12.

8

Once the laser beam path has been changed so as to be parallel to the strip-feed line, the focused position of the laser beam path in the line direction after passing the reflector 212 can be varied merely by shifting the reflector 212 in a horizontal direction.

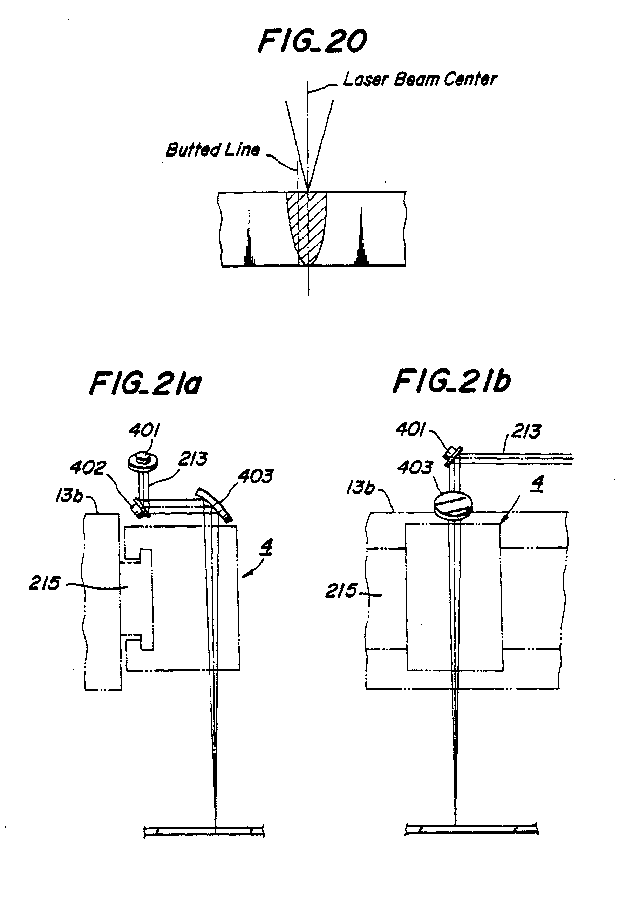

Particularly, the beam path may be slightly varied depending upon the ambient temperature, the leading period of time of the oscillator, the temperature of the reflector, and the like, and consequently there is the possibility that the beam point focussed by the condenser is shifted slightly. The component of such a shift in the direction perpendicular to the strip-feed line causes no problems (because it is in the weld line). However, if the focus is shifted in a direction parallel to the strip feed line, it deviates from the centre of the gap to form the weld profile as shown in Fig. 20. Since this form of joint has a notch in its lower side, it is weak on bending and is unacceptable. For this reason, it is extremely important to control the focus location in the direction parallel to the strip-feed line when using the laser butt welding apparatus. According to the laser butt welding apparatus of the invention, in order to facilitate the positioning of the focus in the strip-feed line direction, it is preferred to bend the laser beam path into a direction parallel to the strip-feed line at least once and then to move the optical system horizontally, after such a bending step, whereby the focus can be moved in a direction parallel to the strip-feed line by the same distance as the amount by which the optical system is moved without moving the focus in the vertical direction and the direction perpendicular to the line. Hence the operation for positioning the focus can be very easily effected.

Other embodiments of optical system adapted to bend the laser beam path to the direction parallel to the line at least once will now be explained.

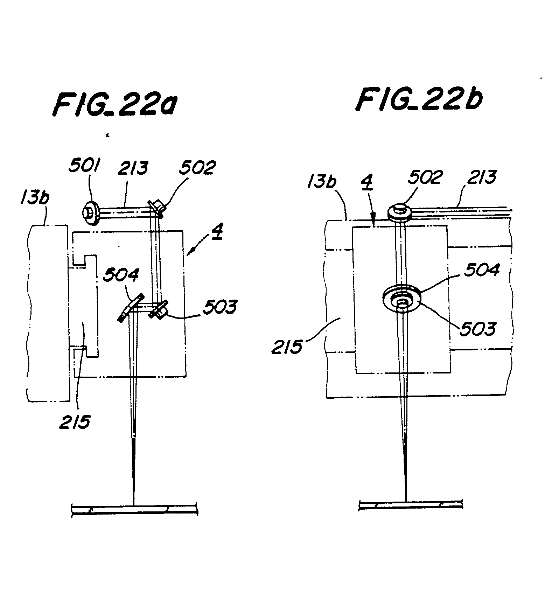

In Figs. 21a and 21b reference numeral 401 is a first reflector adapted to bend a laser beam 213, incident thereupon in a direction perpendicular to the strip-feed line, into a direction vertical to the line, reference numeral 402 is a second reflector adapted to bend the laser beam in a direction parallel to the line, and reference numeral 403 is a condensing reflector adapted to focus the laser beam at a weld zone.

Merely by displacing the condensing reflector 403 in the line direction, the focus is shifted by the same distance at this displacement only in the direction parallel to the line without being shifted in the vertical direction or the direction perpendicular to the line.

The focusing is carried out by moving the reflector 402 and the condensing reflector 403 as one unit in a vertical direction.

Figs. 22a and 22b show another embodiment using a condensing reflector.

Reference numeral 501 is a first reflector adapted to bend the laser beam 213, incident thereupon in a direction perpendicular to the strip-feed line, into a direction parallel to the line, reference numeral 502 is a second reflector adapted to vertically bend the laser beam, reference numeral 503 is a third reflector adapted to bend the thus vertically bent laser beam into a direction parallel to the line, and reference numeral 504 is a condensing reflector adapted to receive the beam in a direction parallel to the line and bend it vertically and focus the laser beam at the weld zone.

According to this embodiment, by displacing the condensing reflector 504 in the direction parallel to the line, the focus point is shifted by the same distance as the displacement of the condenser reflector in the parallel direction without being displaced vertically or in the direction perpendicular to the line.

The focusing is carried out by vertically shifting the reflector 503 and the condensing reflector as one set.

(6) When the welding is completed, the upper clamp members of the inlet and outlet clamps are lifted to release the end portions of the preceding and trailing steel strips, and movement of the welded steel strips starts.

Subsequently, the cylinder 209 is actuated to lift and return the laser torch to the original position, and the other means are returned to their original locations. Thereby, one weld process is completed.

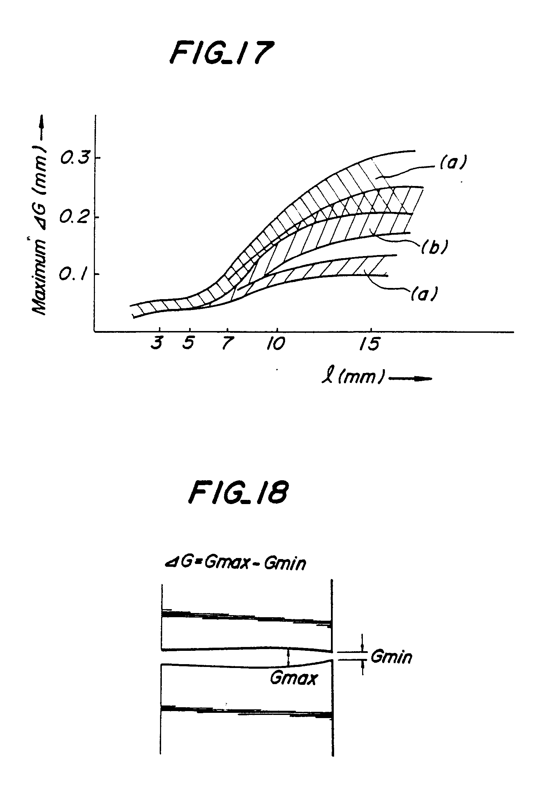

In the above described step (3) for cutting the steel strips, it is particularly important that the cut lines formed by the above cutting operation are parallel to each other and straight for the laser welding. That is, when the laser beam is condensed by the condenser, the diameter of the laser beam at the focus is varied according to the focal length of the condenser. For instance, when a condenser having a focal length of 5 inches is used, said diameter is as small as 0.15 mm. Therefore, according to the laser butt welding, it is possible to increase the energy density and to effect high speed welding, but an extremely high precision is required when butting the materials to be welded. If the cut lines of the materials to be welded are curved, a non-uniform clearance is created even if the butting is effected at a very high precision. In general, when a steel plate is cut by means of a raked shear (guillotine shear, rotary shear or the like), the cut line is more or less curved as shown in Fig. 18 in the transverse direction of the plate. The curved degree of the cut line depends upon the material and the method of clamping, shearing etc but it is observed that the cut line is curved at about 0.1 mm in the case of a steel plate having a thickness of 1.0~3.0 mm. Thus, even if such curved-edge steel strips are butt-welded, welded joints having satisfactory strength cannot be obtained.

According to the present invention, it is possible to obtain a set of steel strips having parallel and nearly straight cut lines by clamping the edge portions of the steel strips between the upper clamp members 12a and 12b (which are more extended towards the shear zone than the lower clamp members 15a and 15b) and the upper end portion of the lower blade 8. Fig. 17 shows the relationship between the distance I from the edge of the upper clamp member to the side face of the adjacent upper blade and the value $\Delta G$ obtained by subtracting the minimum cut gap (Gmin) from the maximum cut gap (Gmax) (see Fig. 18).

9

0 117 751

Table 1 shows the results obtained when the above described cut edge portions are butted and the butted portion is subjected to laser butt welding.

TABLE 1 (Tensile test)

| Distance l (mm) \ Plate thickness (mm) | 1.0 | 1.6 | 2.2 | 3.0 |
|---|---|---|---|---|
| 15 | Δ | x | x | x |
| 10 | Δ | Δ | Δ | x |
| 7 | o | o | o | o |
| 5 | o | o | o | o |
| 3 | o | o | o | o |

Note: o Rupture of base metal
Δ Rupture of base metal or welded joint
x Rupture of welded joint

From the above data, it can be seen that excellent welding is possible in a range of l being not more than 7 mm. In a range of $7<l\leqq15$, rupture at the welded portion is likely to be caused and there is problem in plate-passing, rolling or other processing steps of the strip. In Fig. 17, the zones (a), (b) and (c) correspond to steel strips having thickness (t) of 1.0 mm, 1.6 mm and 3.0 mm respectively. The welding conditions of the test of Table 1 were: a laser power of 1 kw, the materials were cold-rolled steel strip and hot-rolled steel strip (low carbon steel) and the welding speed was 1.0—3.0 m/min.

In Table 1, the marks (Δ) mean that the tensile strength when the welded joint portion was ruptured was about 80—100% of that of the base metal and the marks (x) mean about 40—80% thereof.

Thus, the steel strips of the mark (Δ) satisfactorily endure the plate-passing in the processing line, while some of the steel strips of the mark (x) (l=10, t=3.0 mm) have a tensile strength near 80% of that of the base metal and therefore, they also satisfactorily endure the plate-passing in the processing line.

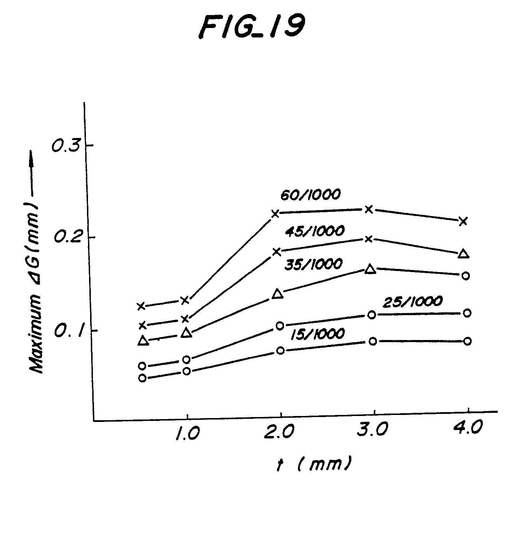

When l cannot be set to be not more than 10 mm for the reason that the extended portion of the upper clamp member interferes with a nozzle portion of the laser torch, the following system is proposed. Fig. 19 shows the relationship of tan α (α: shear rake angle) to the above described value ΔG and the results obtained by performing the tensile test with respect to the welded portions formed by effecting laser butt welding using strips cut under the conditions of tan α and ΔG shown in Fig. 19.

From these results, it will be understood that the smaller is tan α, the smaller is the curve of the cut lines and the better are the welding results. According to the test results it has been found that when the range of tan α is

$$\frac{35+2.5t}{1,000}$$

in which t denotes the thickness of the steel strip, the strength of the joint is high. Fig. 19 is an example when l is 15 mm. In the case of l=12 or 20 mm, similar results were obtained.

Even when l is not more than 10 mm, the curve of the cut line may be more reduced by making tan α smaller and good welded joints can be reliably obtained.

The smaller is tan α, the smaller is the curve of the cut line, but the shearing-cut force becomes larger in proportion to tan α and hence the frame needs to be stronger and thus the equipment cost is increased.

Therefore, the lower limit for the practical range of tan α is about 4 t/1,000. That is, the lower limit is 2.4/1,000 in the case of 0.6 mm in thickness, 12/1,000 in the case of 3 mm in thickness and 18/1,000 in the case of 4.5 mm in thickness.

Next, the use of the station 100 for checking the performances of the optical system for irradiating the laser beam on the weld zone will be explained.

The condensing performance of the condenser deteriorates after a long period of use, or if it is broken or damaged due to spattered metal. Therefore, the condenser should be exchanged at a specific time interval or at an irregular time interval. At such a time, the tip portion of the condenser is removed and a fresh one is attached. By this exchange operation, the welding apparatus is restored to its normal state and becomes useable in the processing line. Usually, the deterioration period of the condensing performance is

**0 117 751**

not constant, and the usable time period is unclear. Further, there is no way to detect the deterioration degree of the condenser other than by means of the difference between the output of the laser beam prior to, and after passing through the condenser or the variation of the depth of penetration of the laser beam. In addition, it is also necessary to check whether the fresh one which is exchanged exhibits a predetermined performance or not. If such checking operations are carried out on the line, the line operation must be stopped during such checking.

For solving the above drawbacks, according to the invention, the station 100 for checking the performances of the optical system is provided at a position located on an extension of the laser torch running line for the welding and where the passing of the steel strip is not interrupted, so that the checking of the condenser can be carried out while steel strips are passing along the strip-feed line, whereby the productivity is increased.

The station for checking the performances of the optical system is used as follows:

First, the laser means 4 stopped at a predetermined retracted position on the operational side is carried to the station for checking the performances of the optical system by actuating motor 216. Next, the sample plate 103 is placed on the table 101, and secured onto the table by means of press plates 104 and bolts 105. Then, the laser torch is run over the sample plate to irradiate said plate with the laser beam and then the color of the reflected beam and the depth of the weld penetration are checked and it is ascertained whether or not the focus of the condenser is proper and whether the condensing performance has deteriorated or not. This is utilized to check the distribution of the laser beam intensity and the deviation of the laser beam axis from the butted line.

Fig. 6(b) is another embodiment of the station for checking the performances of the optical system in which the lower portion of the slit is closed to prevent the penetration or scattering of the laser beam.

The following Table 2 shows a comparison of the welding time of laser butt welding according to the invention with TIG arc welding. The comparison was made with respect to two kinds of steel strips having a thickness of 1.0 mm and 2.3 mm. The laser power was 1 or 3 kw and the torch-running distance in the laser butt welding and the TIG arc welding was 1.5 m. It will be understood from this Table 2 that, with respect to the same thickness of steel strips, the welding time in the laser butt welding is less than half as short as that of the TIG arc welding.

TABLE 2

| Welding method | Plate thickness (mm) | Laser power (kw) | Welding speed (cm/min) | (1) Welding time (sec) | (2) Operating time before and after the welding (sec) | (1)+(2) Total time (sec) |
|---|---|---|---|---|---|---|
| TIG | 2.3 | 4 | 30 | 130 | 30 | 210 |
| TIG | 1.0 | 2 | 60 | 90 | 30 | 120 |
| Laser butt (Invention) | 2.3 | 1 | 150 | 60 | 30 | 90 |
| Laser butt (Invention) | 1.0 | 1 | 500 | 20 | 30 | 50 |
| Laser butt (Invention) | 2.3 | 3 | 400 | 25 | 30 | 55 |

The following Table 3 shows the test results obtained in tensile tests with respect to the welded portions of various steel strips obtained by using the laser butt welding apparatus according to the present invention. The width of the test steel strip wsa 914—1,067 mm, and five test pieces were cut off in the width direction and the test was made with respect to these test pieces. In all the test pieces, the rupture occurred at the base metal and the welding strength was excellent.

11

# 0 117 751

TABLE 3
Mechanical property of laser welded joints

(Laser power 1 kw)

| Steel | | Thickness (mm) | Welding speed (m/min) | Tensile strength | |
|---|---|---|---|---|---|
| | | | | Tensile strength (kg/mm$^2$) | Location of rupture |
| Mild | | 1.0 | 4.0 | 31 | Base metal |
| High-tensile | | 1.0 | 4.0 | 40 | ,, |
| Galvanized | | 0.9 | 3.5 | 31 | ,, |
| Silicon | | 2.0 | 1.25 | 60 | ,, |
| Stainless | SUS304 | 2.0 | 1.25 | 62 | ,, |
| | SUS430 | 1.0 | 4.0 | 49 | ,, |

Table 4 shows the results of the welding using the apparatus according to the invention while the l, L and $\theta$ are varied. As may be understood from this table, it is preferable that the interrelation between the torch and the filler wire feed means is set such that l is in a range of 1—5 mm, L is not more than 20 mm and $\theta$ is not more than 35°.

TABLE 4

| Distance / Feed angle | | $\theta$=20° | $\theta$=30° | $\theta$=40° | $\theta$=50° |
|---|---|---|---|---|---|
| L=10, | l=3 | o | o | x | x |
| L=10, | l=5 | o | o | x | x |
| L=10, | l=8 | x | x | x | x |
| L=20, | l=3 | o | o | x | x |
| L=20, | l=5 | o | o | x | x |
| L=20, | l=8 | x | x | x | x |
| L=30, | l=3 | x | x | x | x |
| L=30, | l=5 | x | x | x | x |
| L=30, | l=8 | x | x | x | x |

Note:   o... Good (Welding was carried out continuously over the whole weld zone).
x... Bad (Welding was carried out discontinuously).

The invention can exhibit the following merits:
(1) The welding time can be reduced.
(2) The productivity is higher.
(3) All kinds of steels, for instance, special steels such as silicon steel, stainless steel or the like, plated steels such as a galvanized steel sheet or the like, and high tensile strength steels can be welded using the laser butt welding apparatus according to the invention.
(4) Since no projected portion at the weld portion is formed, the formation of faults caused when coiling can be reduced.

12

(5) The strength at the welded portions is improved, so that no rupture of the welded portion occurs in the line.

(6) Even when the gap between the butted edges of the steel strips is not uniform, an appropriate welding strength can be obtained over the whole weld zone by controlling the filler wire feed rate and the center of the laser beam.

## Claims

1. A butt welding apparatus for joining together the tail edge of a preceding steel strip to the front edge of a trailing steel strip, which apparatus comprises

(i) a clamp means (3) for the end portions of the steel strips and including an inlet clamp (3a) and an outlet clamp (3b), at least one of which is moveable forward and rearward along the strip-feed line and each having an upper clamp member (12a, 12b) and a lower clamp member (15a, 15b) wherein the upper clamp members (12a, 12b) extend nearer to each other than the lower clamp members (15a, 15b),

. (ii) a cutting means (2) positioned between the inlet and outlet clamps for cutting the end portions of the strips to form the front and tail edges and including a preceding steel strip shear and a trailing steel strip shear each having a lower shearing blade (8) and an upper shearing blade (7),

(iii) a means for butting the front and tail edges of the steel strips while being clamped by means of said clamp means (3), and

(iv) a means of welding the front and tail edges together including a center clamp (300) adapted to clamp the butted front and tail edges of the steel strips in cooperation with the upper clamp members (12a, 12b) during welding characterised in that

(a) said upper shearing blades (7) and said lower shearing blades (8) are advanceable and retractable in a direction perpendicular to the strip-feed line so as to simultaneously cut the end portions of the preceding and trailing steel strips to form said front and tail edges whilst the end portions of the preceding and trailing steel strips are held between the lower shearing blades (8) and the upper clamp members (12a, 12b),

(b) the welding means includes a laser means (4) (4a) comprising a laser oscillator (1) placed off the strip-feed line, an optical system (211, 212, 201) (401, 402, 403) (501, 502, 503, 504) to direct and focus a laser beam (213) irradiated from said laser oscillator on to the weld zone constituted by the butted front and tail edges, a torch member (202) for applying the laser beam (213) and which is movable transversely of the steel strips, and a means (600) for continuously feeding a filler wire to the weld zone, and

(c) the butting means (5) includes means (17, 18, 25, 26) for positioning the strips so that the butted front and tail edges are spaced apart by a distance smaller than the diameter of the filler wire.

2. An apparatus according to claim 1, wherein the optical system of the laser means (4) (4a) is arranged to cause the laser beam (213) to extend in a direction parallel to the steel strip-feed line at least once on its path to the weld zone from the laser oscillator.

3. An apparatus according to claim 2, wherein the optical system comprises first and second reflectors and a condenser wherein the first reflector (211) receives the laser beam (213) from a direction perpendicular to the strip-feed line and bends it into a direction parallel to the strip-feed line, the second reflector (212) receives the beam from the direction parallel to the strip-feed line and bends it vertically, and the condenser (201) focusses the vertically bent beam onto the weld zone.

4. An apparatus according to claim 2, wherein the optical system comprises first and second reflectors and a condenser wherein the first reflector (401) receives the laser beam (213) from a direction perpendicular to the strip-feed line and bends it vertically, the second reflector (402) receives the vertically bent laser beam and bends it in a direction parallel to the strip-feed line, and the condenser (403) receives the laser beam from the direction parallel to the strip-feed line and focusses it at the weld zone.

5. An apparatus according to claim 2, wherein the optical system comprises first, second and third reflectors and a condenser wherein the first reflector (501) receives the laser beam from a direction perpendicular to the strip-feed line and bends it into a direction parallel to the strip-feed line, the second reflector (502) receives the beam from the direction parallel to the strip-feed line and bends it vertically, the third reflector (503) receives the thus vertically bent beam and bends it in a direction parellel to the strip-feed line, and the condenser (504) receives the laser beam thus bent in a direction parallel to the strip-feed line and bends it vertically and focusses it on to the weld zone.

6. An apparatus according to any one of claims 1 to 5, wherein the distance between a respective one of said upper clamp members (12a, 12b) and the side edge of the adjacent upper shearing blade (7) is not more than 10 mm.

7. An apparatus according to any one of claims 1 to 6, wherein tan α of the upper shearing blades (7), wherein α is the rake angle, is not more than

$$\frac{35+2.5t}{1000}$$

wherein t is the thickness (mm) of the steel strips.

8. An apparatus according to any one of claims 1 to 7, wherein the butting means (5) comprises a guide

**0 117 751**

member (26) adapted to guide the or each clamp (3a, 3b) which is movable and which has a supporting member (17) which is in a sliding relationship with respect to the guide member (26); a drive means (16) adapted to slide the supporting member (17) with respect to the guide member (26); and a movable stopper (18) adapted to limit the movement of the supporting member (17) so that the gap between the front and tail edges is smaller than the diameter of the filler wire.

9. An apparatus according to any one of claims 1 to 8, wherein the filler wire feed means (600) comprises a reel (601) adapted to store the filler wire; rollers (607) adapted to feed the filler wire from the reel; and a guide tube (604) adapted to guide the filler wire from the feed rollers (607) to the weld zone, said filler wire feed means (600) being arranged to feed the filler wire under such a condition that the angle between the steel strip and the fed filler wire is not more than 35°, the distance between the point of contact of the filler wire with the steel strip plane and the intersecting point of the laser beam optical axis with the steel strip plane is from 1 to 5 mm, and the distance between the tip of the guide tube (604) and the point of intersection of the laser beam optical axis with the steel strip plane is not more than 20 mm.

10. An apparatus according to any one of claims 1 to 9, wherein said filler wire feed means (600) comprises a reel (601) for storing the filler wire, rolls (607) for feeding the filler wire from the reel, and means (604) for guiding the filler wire from the feed rolls to the weld zone, the filler wire feed means being integrally fixed to the torch member (202).

11. An apparatus according to any one of claims 1 to 10 and further comprising a motor (220) adapted to displace the torch member (202) along the strip feed line, means (701, 702) for detecting the size and location of the centre line of the gap between the front and tail edges of the steel strips, and means (703) (220) (608) for controlling the location of the torch member (202) and the supply rate of the filler wire in dependence on an output signal from the detecting means, whereby the laser beam is run at the center of the gap between the front and tail edges and the amount of filler wire supplied is regulated by controlling the supply rate according to the size of the gap.

12. An apparatus accoridng to any one of claims 1 to 10 and further comprising a motor (220) adapted to displace the torch member (202) along the strip feed line, means (701, 702) for detecting the size and location of the center line of the gap between the front and tail edges of the steel strips, and means (703) (220) (216) for controlling the location of the torch member (202) and the running speed of the torch member (202) in dependence on an output signal from the detecting means (701, 702), whereby the laser beam is run at the center of the gap between the front and tail edges of the amount of the filler wire supplied is regulated by controlling the running speed of the torch member according to the size of the gap.

13. An apparatus according to claim 11 or 12, wherein the detecting means comprises a light irradiator (701) and a light receiving element (702) for determining the size and location of the center line of the gap and generating the output signal, and the controlling means comprises an arithmetic circuit including the light receiving element (702) for controlling the location of the torch member (202) and the amount of filler wire supplied.

14. An apparatus according to claim 11, 12 or 13 wherein the controlling means further comprises a memory means for memorizing the data on the size and location of the center line of the gap provided by the detecting means (701, 702) and for generating the output signal.

15. An apparatus according to any one of the preceding claims, which comprises a station (100) adapted for checking the performance of the optical system and located on an extension of the running path of the torch member (202).

**Patentansprüche**

1. Vorrichtung zum Stumpfschweißen zur Verbindung der Hinterkante eines vorangehenden Stahlbandes mit der Vorderkante eines nachfolgenden Stahlbandes, mit

(i) einer Klemmvorrichtung (3) für die Endabschnitte der Stahlbänder, und mit einer Einlaßklemme (3a) und einer Auslaßklemme (3b), von denen mindestens eine entlang der Band-Zuführlinie vorwärts und rückwärts bewegbar ist und von denen jede einen oberen Klemmteil (12a, 12b) und einen unteren Klemmteil (15a, 15b) hat, wobei sich die oberen Klemmteile (12a, 12b) näher gegeneinander erstrecken als die unteren Klemmteile (15a, 15b),

(ii) einer zwischen den Einlaß- und Auslaßklemmen angeordneten Schneidvorrichtung (2) zum Abschneiden der Endabschnitte der Bänder zur Bildung der Vorder- und Hinterkanten, die eine Schere für das vorangehende Stahlband und eine Schere für das nachfolgende Stahlband aufweist, von denen jede mit einem unteren Schermesser (8) und einem oberen Schermesser (7) versehen ist,

(iii) einer Vorrichtung zum Aneinanderstoßen der Vorder- und Hinterkanten der in der Klemmvorrichtung (3) eingeklemmten Stahlbänder, und

(iv) einer Vorrichtung zum Zusammenschweißen der Vorder- und Hinterkanten, die eine Zentralklemme (300) aufweist, welche die aneinandergestoßenen Vorder- und Hinterkanten der Stahlbänder unter Mitwirkung der oberen Klemmteile (12a, 12b) während des Verschweißens einklemmen kann, dadurch gekennzeichnet, daß

(a) die oberen Schermesser (7) und die unteren Schermesser (8) in einer rechtwinklig zur Band-Zuführlinie verlaufenden Richtung vorschiebbar und zurückziehbar sind, damit sie zur Bildung der Vorder- und Hinterkanten die Endabschnitte der vorangehenden und der nachfolgenden Stahlbänder

14

# 0 117 751

gleichzeitig abschneiden, während die Endabschnitte der vorangehenden und der nachfolgenden Stahlbänder zwischen den unteren Schermessern (8) und den oberen Klemmteilen (12a, 12b) gehalten sind,

(b) daß die Schweißvorrichtung aufweist: eine Laservorrichtung (4) (4a) mit einem Laser-Oszillator (1), der außerhalb der Band-Zuführlinie angeordnet ist, ein optisches System (211, 212, 201) (401, 402, 403) (501, 502, 503, 504), das einen von dem Laser-Oszillator abgegebenen Laserstrahl (213) auf die von den aneinandertestoßenen Vorder- und Hinterkanten gebildete Schweißzone lenkt und fokussiert, einen quer zu den Stahlbändern bewegbaren Brennerteil (202) zum Ansetzen des Laserstrahls (213), und eine Vorrichtung (600) zum kontinuierlichen Zuführen eines Schweißdrahtes zur Schweißzone, und

(c) daß die Vorrichtung (5) zum Aneinanderstoßen eine Einrichtung (17, 18, 25, 26) enthält, welche die Bänder so positioniert, daß die aneinandergestoßenen Vorderund Hinterkanten um einen Abstand getrennt sind, der geringer ist als der Durchmesser des Schweißdrahtes.

2. Vorrichtung nach Anspruch 1, bei der das optische System der Laservorrichtung (4) (4a) derart angeordnet ist, daß es den Laserstrahl (213) mindestens einmal auf seinem Weg vom Laser-Oszillator zur Schweißzone zu einem Verlauf in einer Richtung parallel zur Stahlband-Zuführlinie veranlaßt.

3. Vorrichtung nach Anspruch 2, bei der das optische System einen ersten und einen zweiten Reflektor und einen Kondensor aufweist, wobei der erste Reflektor (211) den Laserstrahl (213) aus einer rechtwinklig zur Band-Zuführlinie verlaufenden Richtung aufnimmt und ihn in eine parallel zur Band-Zuführlinie verlaufende Richtung biegt, der zweite Reflektor (212) den Strahl aus der parallel zur Band-Zuführlinie verlaufenden Richtung aufnimmt und ihn vertikal biegt, und der Kondensor (201) den vertikal gebogenen Strahl zur Schweißzone hin fokussiert.

4. Vorrichtung nach Anspruch 2, bei der das optische System einen ersten und einen zweiten Reflektor und einen Kondensor aufweist, wobei der erste Reflektor (401) den Laserstrahl (213) aus einer rechtwinklig zur Band-Zuführlinie verlaufenden Richtung aufnimmt und ihn vertikal biegt, der zweite Reflektor (402) den Vertikal gebogenen Laserstrahl aufnimmt und ihn in eine parallel zur Band-Zuführlinie verlaufende Richtung biegt, und der Kondensor (403) den Laserstrahl aus der parallel zur Band-Zuführlinie verlaufenden Richtung aufnimmt und ihn an der Schweißzone fokussiert.

5. Vorrichtung nach Anspruch 2, bei der das optische System einen ersten, einen zweiten und einen dritten Reflektor und einen Kondensor aufweist, wobei der erste Reflektor (501) den Laserstrahl aus einer rechtwinklig zur Band-Zuführlinie verlaufenden Richtung aufnimmt und ihn in eine parallel zur Band-Zuführlinie verlaufende Richtung biegt, der zweite Reflektor (502) der Strahl aus der parallel zur Band-Zuführlinie verlaufenden Richtung aufnimmt und ihn vertikal biegt, der dritte Reflektor (503) den auf diese Weise vertikal gebogenen Strahl aufnimmt und ihn in eine parallel zur Band-Zuführlinie verlaufende Richtung biegt, und der Kondensor (504) den auf diese Weise in eine parallel zur Band-Zuführlinie verlaufenden Richtung gebogenen Laserstrahl aufnimmt, ihn vertikal biegt und ihn zur Schweißzone hin fokussiert.

6. Vorrichtung nach einem der Ansprüche 1 bis 5, bei der der Abstand zwischen einem jeweiligen oberen Klemmteil (12a, 12b) und der Seitenkante des angrenzenden oberen Schermessers (7) nicht mehr als 10 mm beträgt.

7. Vorrichtung nach einem der Ansprüche 1 bis 6, bei der tang o der oberen Schermesser (7), wenn o der Ansatzwinkel ist, nicht mehr als

$$\frac{35+2,5t}{1000}$$

beträgt, wobei t die Dicke (mm) der Strahlbänder ist.

8. Vorrichtung nach einem der Ansprüche 1 bis 7, bei der die Vorrichtung (5) zum Aneinanderstoßen aufweist: einen Führungsteil (26) zum Führen der oder jeder Klemme (3a, 3b), die bewegbar ist und einen Halteteil (17) besitzt, welcher zu dem Führungsteil (26) verschiebbar ist; eine Antriebsvorrichtung (16) zum Verschieben des Halteteils (17) in Bezug auf den Führungsteil (26); und einen bewegbaren Anschlag (18), der in der Lage ist, die Bewegung des Halteteils (17) derart zu begrenzen, daß der Spalt zwischen den Vorder- und Hinterkanten geringer ist als der Durchmesser des Schweißdrahtes.

9. Vorrichtung nach einem der Ansprüche 1 bis 8, bei der die Schweißdraht-Zuführvorrichtung (600) eine Spule (601) für einen Schweißdraht-Vorrat, Rollen (607) zum Zuführen des Schweißdrahtes von der Spule, und ein Führungsrohr (604) zum Führen des Schweißdrahtes von den Zuführrollen (607) zur Schweißzone aufweist; wobei die Schweißdraht-Zuführvorrichtung (600) den Schweißdraht derart zuführt, daß der Winkel zwischen dem Stahlband und dem zugeführten Schweißdraht nicht größer ist als 35°, der Abstand zwischen dem Berührungspunkt des Schweißdrahtes mit der Ebene des Stahlbandes und dem Schnittpunkt der optischen Achse des Laserstrahls mit der Ebene des Stahlbandes 1 bis 5 mm beträgt, und der Abstand zwischen der Spitze des Führungsrohrs (604) und dem Schnittpunkt der optischen Achse des Laserstrahls mit der Ebene des Stahlbandes nicht größer ist als 20 mm.

10. Vorrichtung nach einem der Ansprüche 1 bis 9, bei der die Schweißdraht-Zuführvorrichtung (600) eine Spule (601) für einen Schweißdraht-Vorrat, Rollen (607) zum Zuführen des Schweißdrahtes von der Spule, und eine Vorrichtung (604) zur Führung des Schweißdrahtes von den Zuführrollen zur Schweißzone aufweist, wobei die Schweißdraht-Zuführvorrichtung einstückig an dem Brennerteil (202) befestigt ist.

15

**0 117 751**

11. Vorrichtung nach einem der Ansprüche 1 bis 10 und ferner versehen mit einem Motor (220) zum Verschieben des Brennerteils (202) entlang der Band-Zuführlinie, einer Vorrichtung (710, 702) zum Ermitteln der Größe und Position der Mittellinie des Spaltes zwischen den Vorder- und Hinterkanten des Stahlbänder, und einer Vorrichtung (703) (220) (608), die die Position des Brennerteils (202) und die Zuführrate des Schweißdrahtes in Abhängigkeit von einem Ausgangssignal von der Ermittlungsvorrichtung steuert, wodurch der Laserstrahl auf der Mitte des Spaltes zwischen den Vorder- und Hinterkanten verläuft wird die Menge zugeführten Schweißdrahtes reguliert wird, indem die Zuführrate entsprechend der Größe des Spaltes gesteuert wird.

12. Vorrichtung nach einem der Ansprüche 1 bis 10 und ferner versehen mit einem Motor (220) zum Verschieben des Brennerteils (202) entlang der Band-Zuführlinie, einer Vorrichtung (701, 702) zum Ermitteln der Größe und Position der Mittellinie des Spaltes zwischen den Vorder- und Hinterkanten der Stahlbänder, und einer Vorrichtung (703) (220) (216), die die Position des Brennerteils (202) und die Laufgeschwindigkeit des Brennerteils (202) in Abhängigkeit von einem Ausgangssignal von der Ermittlungsvorrichtung (701, 702) steuert, wodurch der Laserstrahl auf der Mitte des Spaltes zwischen der Vorder- und Hinterkanten verläuft und die Menge zugeführten Schweißdrahtes reguliert wird, indem die Laufgeschwindigkeit des Brennerteils entsprechend der Größe des Spaltes gesteuert wird.

13. Vorrichtung nach Anspruch 11 oder 12, bei der die Ermittlungsvorrichtung ein lichtabgebendes Element (701) und ein lichtaufnehmendes Element (702) zum Bestimmen der Größe und der Position der Mittellinie des Spaltes und zum Erzeugen des Ausgangssignals aufweist und die Steuervorrichtung eine das lichtaufnehmende Element (702) einschließende Rechenschaltung zum Steuern der Position des Brennerteils (202) und der Menge des zugeführten Schweißdrahtes aufweist.

14. Vorrichtung nach Anspruch 11, 12 oder 13, bei der die Steuervorrichtung ferner eine Speichervorrichtung zum Speichern der von der Ermittelungsvorrichtung (701, 702) gelieferten Daten zur Größe und Position der Mittellinie des Spaltes und zum Erzeugen des Ausgangssignals aufweist.

15. Vorrichtung nach jedem der vorhergehenden Ansprüche, die eine Station (100) aufweist, welche die Funktion des optischen Systems überprüft und auf einer Verlängerung des Laufweges des Brennerteils (202) angeordnet ist.

**Revendications**

1. Appareil de soudage bout à bout pour joindre l'un à l'autre le bord postérieur d'un feuillard d'acier de tête et le bord antérieur d'un feuillard d'acier de queue, lequel appareil comporte

(i) un moyen de serrage (3) pour les parties extrêmes des feuillards d'acier, comprenant un dispositif · de serrage d'entrée (3a) et un dispositif de serrage de sortie (3b), dont au moins un est mobile vers l'avant et vers l'arrière le long de la chaîne d'avance de feuillards et chacun ayant un élément supérieur de serrage (12a, 12b) et un élément inférieur de serrage (15a, 15b) dans lesquels les éléments supérieurs de serrage (12a, 12b) s'étendent plus près l'un de l'autre que les éléments inférieurs de serrage (15a, 15b),

(ii) un moyen de coupe (2) disposé entre les dispositifs de serrage d'entrée et de sortie pour couper les parties extrêmes des feuillards afin de former les bords antérieur et postérieur et comprenant une cisaille pour feuillard d'acier de tête et une cisaille pour feuillard d'acier de queue ayant chacune une lame inférieure de cisaillage (8) et une lame supérieure de cisaillage (7),

(iii) un moyen pour abouter les bords antérieur et postérieur des feuillards d'acier tout en les serrant à l'aide du moyen de serrage (3), et

(iv) un moyen pour souder l'un à l'autre les bords antérieur et postérieur comprenant un dispositif de serrage central (300) conçu pour serrer les bords antérieur et postérieur bout des feuillards d'acier en coopération avec les éléments supérieurs de serrage (12a, 12b) pendant le soudage, caractérisé en ce que

(a) les lames supérieures de cisaillage (7) et les lames inférieures de cisaillage (8) peuvent être avancées et reculées dans une direction perpendiculaire à la chaîne d'avance de feuillards de façon à couper simultanément les parties extrêmes des feuillards d'acier de tête et de queue pour former lesdits bords antérieur et postérieur cependant que les parties extrêmes des feuillards d'acier de tête et de queue sont maintenues entre les lames inférieures de cisaillage (8) et les éléments supérieurs de serrage (12a, 12b),

(b) le moyen de soudage comprend un moyen à laser (4) (4a) comportant un oscillateur (1) à laser placé à l'écart de la chaîne d'avance de feuillards, un système optique (211, 212, 201) (401, 402, 403) (501, 502, 503, 504) pour diriger et concentrer un rayon laser (213) émis depuis ledit oscillateur à laser jusque sur la zone de soudure constituée par les bords antérieur et postérieur bout à bout, un élément formant chalumeau (202) pour appliquer le rayon laser (213) et qui est mobile transversalement par rapport aux feuillards d'acier, et un moyen (600) pour faire avancer de manière continue une baguette d'apport jusqu'à la zone de soudure, et

(c) le moyen d'aboutement (5) comprend les moyens (17, 18, 25, 26) pour placer les feuillards de façon que les bords antérieur et postérieur aboutés soient séparés par une distance inférieure au diamètre de la baguette d'apport.

2. Appareil selon la revendication 1, dans lequel le système optique du moyen à laser (4) (4a) est agencé pour faire s'étendre le rayon laser (213) dans une direction parallèle à la chaîne d'avance de feuillards d'acier au moins une fois sur son parcours jusqu'à la zone de soudure depuis l'oscillateur laser.

3. Appareil selon la revendication 2, dans lequel le système optique comporte des premier et second réflecteurs et un condenseur dans lequel le premier réflecteur (211) reçoit le rayon laser (213) depuis une direction perpendiculaire à la chaîne d'avance de feuillards et le coude pour lui faire prendre une direction parallèle à la chaîne d'avance de feuillards, le second réflecteur (212) reçoit le rayon de la direction parallèle à la chaîne d'avance de feuillards et le coude verticalement, et le condenseur (201) concentre sur la zone de soudure le rayon coudé verticalement.

4. Appareil selon la revendication 2, dans lequel le système optique comporte des premier et second réflecteurs et un condenseur dans lequel le premier réflecteur (401) reçoit le rayon laser (213) depuis une direction perpendiculaire à la chaîne d'avance de feuillards et le coude verticalement, le second réflecteur (402) reçoit le rayon laser coudé verticalement et le coude dans une direction parallèle à la chaîne d'avance de feuillards, et le condenseur (403) reçoit le rayon laser depuis la direction parallèle à la chaîne d'avance de feuillards et le concentre sur la zone de soudure.

5. Appareil selon la revendication 2, dans lequel le système optique comporte des premier, second et troisième réflecteurs et un condenseur dans lequel le premier réflecteur (501) reçoit la rayon laser depuis une direction perpendiculaire à la chaîne d'avance de feuillards et le coude dans une direction parallèle à la chaîne d'avance de feuillards, le second réflecteur (502) reçoit le rayon depuis la direction parallèle à la chaîne d'avance de feuillards et le coude verticalement, le troisième réflecteur (503) reçoit le rayon ainsi coudé verticalement et le coude dans une direction parallèle à la chaîne d'avance de feuillards, et le condenseur (504) reçoit le rayon laser ainsi coudé dans une direction parallèle à la chaîne d'avance de feuillards et le coude verticalement et le concentre sur la zone de soudure.

6. Appareil selon l'une quelconque des revendications 1 à 5, dans lequel la distance entre un élément supérieur de serrage (12a, 12b) respectif et le bord latéral de la lame supérieure de cisaillement (7) adjacente ne dépasse pas 10 mm.

7. Appareil selon l'une quelconque des revendications 1 à 6, dans lequel tgα des lames supérieures de cisaillement (7), où α est l'angle de coupe, ne dépasse pas

$$\frac{35+2,5t}{1000}$$

où t est l'épaisseur (mm) des feuillards d'acier.

8. Appareil selon l'une quelconque des revendications 1 à 7, dans lequel le moyen d'aboutement (5) comporte un élément de guidage (26) conçu pour guider le ou chaque dispositif de serrage (3a, 3b) qui est mobile et qui a un élément de support (17) qui coulisse par rapport à l'élément de guidage (26); un moyen d'entraînement (16) conçu pour faire coulisser l'élément de support (17) par rapport à l'élément de guidage (26); et une pièce d'arrêt (18) mobile conçue pour limiter le mouvement de l'élément de support (17) de façon que l'espace entre les bords antérieur et postérieur soit inférieur au diamètre de la baguette d'apport.

9. Appareil selon l'une quelconque des revendications 1 à 8, dans lequel le moyen (600) d'alimentation en baguette d'apport comporte une bobine (601) conçue pour emmagasiner la baguette d'apport; des galets (607) conçus pour faire avancer la baguette d'apport depuis la bobine; et un tube de guidage (604) conçu pour guider la baguette d'apport depuis les galets d'amenée (607) jusqu'à la zone de soudure, ledit moyen (600) d'alimentation en baguette d'apport étant agencé pour faire avancer la baguette d'apport dans des conditions telles que l'angle entre le feuillard d'acier et la baguette d'apport fournie ne dépasse pas 35°, la distance entre le point de contact de la baguette d'apport avec le plan du feuillard d'acier et le point d'intersection de l'axe optique du rayon laser avec le plan du feuillard d'acier est de 1 à 5 mm, et la distance entre le bout du tube de guidage (604) et le point d'intersection de l'axe optique du rayon laser avec le plan du feuillard d'acier ne dépasse pas 20 mm.

10. Appareil selon l'une quelconque des revendications 1 à 9, dans lequel le moyen (600) d'alimentation en baguette d'apport comporte une bobine (601) pour emmagasiner la baguette d'apport, des galets (607) pour faire avancer la baguette d'apport depuis la bobine, et un moyen (604) pour guider la baguette d'apport depuis les galets d'amenée jusqu'à la zone de soudure, le moyen d'alimentation faisant corps avec l'élément formant chalumeau (202).

11. Appareil selon l'une quelconque des revendications 1 à 10, comportant en outre un moteur (220) conçu pour déplacer l'élément formant chalumeau (202) le long de la chaîne d'avance de feuillards, un moyen (701, 702) pour détecter les dimensions et l'emplacement de l'axe de l'espace entre les bords antérieur et postérieur des feuillards d'acier, et des moyens (703) (220) (608) pour commander la position de l'élément formant chalumeau (202) et la vitesse d'alimentation baguette d'apport en fonction d'un signal de sortie du moyen de détection, grâce à quoi le rayon laser est amené à passer au centre de l'espace entre les bords antérieur et postérieur et la quantité de baguette d'apport fournie est régulée en commandant la vitesse d'alimentation d'après les dimensions de l'espace.

12. Appareil selon l'une quelconque des revendications 1 à 10, comportant en outre un moteur (220) conçu pour déplacer l'élément formant chalumeau (202) le long de la chaîne d'avance de feuillards, un moyen (701, 702) pour détecter les dimensions et la situation de l'axe de l'espace entre les bords antérieur et postérieur des feuillards d'acier, et des moyens (703) (220) (216) pour commander la situation de l'élément formant chalumeau (202) et la vitesse de déplacement de l'élément formant chalumeau (202) en

**0 117 751**

fonction d'un signal de sortie du moyen de détection (701, 702), grâce à quoi le rayon laser est amené à passer au centre de l'espace entre les bords antérieur et postérieur et la quantité de baguette d'apport fournie est régulée en commandant la vitesse de déplacement de l'élément formant chalumeau d'après les dimensions de l'espace.

13. Appareil selon la revendication 11 ou 12, dans lequel le moyen de détection comporte un radiateur de lumière (701) et un élément photorécepteur (702) pour déterminer les dimensions et la situation de l'axe de l'espace et produire le signal de sortie, et le moyen de commande comporte un circuit arithmétique comprenant l'élément photorécepteur (702) pour commander la position de l'élément formant chalumeau (202) et la quantité de baguette d'apport fournie.

14. Appareil selon la revendication 11, 12 ou 13, dans lequel le moyen de commande comporte en outre un moyen formant mémoire pour mémoriser les données relatives aux dimensions et à l'emplacement de l'axe central de l'espace et fournies pae le moyen de détection (701, 702) et pour produire le signal de sortie.

15. Appareil selon l'une quelconque des revendications précédentes, qui comporte un poste (100) conçu pour contrôler les performances du système optique et situé sur un prolongement du parcours de déplacement de l'élément formant chalumeau (202).

FIG. 1

# FIG_2

# FIG_3

## FIG. 4

## FIG. 5

0 117 751

## FIG_6a

## FIG_6b

## FIG_7

## FIG_8

4

# FIG. 9

*15a*

*B*

*B*

*33*

*16*

*34*

*35*

# FIG. 10

*15a*

*35*

*35*

*34*

*33*

*16*

*15a*

## FIG.11

## FIG.12

FIG_13

*301*

*306*

*304*

*304*

*305*

*305*

*303*

*303*

FIG_14

*12b*

*12a*

*302*

*306*

*308*

*301*

*15b*

*307*

*15a*

FIG_15

*3b*

*3a*

*Sb*

*Sa*

*3b*

*3a*

*Sb*

*Sa*

*3b*

*3a*

*Sb*

*Sa*

7

## FIG_16a

## FIG_16b

# FIG_16c

12b  L  12a

Sb    Sa

# FIG_16d

12b  12a

Sb    e    Sa

# FIG_16e

12b  12a

Sb    Sa

300

# FIG_16f

12b  4a  12a

Sb    300    Sa

# FIG_17

# FIG_18

⊿G = Gmax - Gmin

# FIG_19

# FIG. 20

Laser Beam Center

Butted Line

# FIG. 21a

401
402
213
403
13b
4
215

# FIG. 21b

401
213
403
13b
4
215

FIG.22a

FIG.22b

# FIG.23

## FIG.24

## FIG.25

## FIG_26a

## FIG_26b

## FIG.27a

## FIG.27b

# FIG. 28

## FIG. 29

## FIG. 30